# EUROPEAN PATENT SPECIFICATION

(11) **EP 2 081 988 B1**
(45) Date of publication and mention of the grant of the patent: **04.01.2017**
(21) Application number: 07840041.3
(22) Date of filing: 13.11.2007
(51) Int. Cl.: C08K 5/35, C08L 51/00, C08L 21/00, B29C 70/00, C08K 3/36, C09J 7/00, D06M 23/00, C08K 7/02, C08K 5/357, C08J 5/24, C09J 7/02, C09J 11/06, C08L 63/00

(54) **BENZOXAZINE COMPOSITIONS WITH CORE SHELL RUBBERS**
BENZOXAZIN-ZUSAMMENSETZUNG MIT KERN-SCHALEN-GUMMIS
COMPOSÉS DE TYPE BENZOXAZINE AVEC CAOUTCHOUCS AVEC ÂME ET ENVELOPPE

(30) Priority: 13.11.2006 US 865462 P
(43) Date of publication of application: 29.07.2009
(73) Proprietor: Henkel IP & Holding GmbH, 40589 Düsseldorf (DE)
(72) Inventor: LEHMANN, Stanley L., Martinez, California 94553 (US); LI, Wei Helen, Danville, California 94506 (US); WONG, Raymond S., San Ramon, California 94583 (US)
(74) Representative: Henkel IP Department
(86) International application number: PCT/US2007/023859
(87) International publication number: WO 2008/060545

(56) References cited:
- EP-A1- 1 632 533
- WO-A1-2005/000955
- WO-A1-2005/019291
- WO-A1-2007/064801
- JP-A- 2003 082 117
- US-A1- 2003 018 131
- US-A1- 2005 042 961
- US-A1- 2005 042 961
- US-B1- 6 620 905

## Description

### BACKGROUND OF THE INVENTION

### Field of the Invention

Curable compositions, such as benzoxazine-based ones together with core shell rubbers, are useful in applications within the aerospace industry, such as for example as a heat curable composition for use as a matrix resin or an adhesive, and form the basis of the present invention.

### Brief Description of Related Technology

Epoxy resins with various hardeners have been used extensively in the aerospace and electronics industries both as adhesives and as matrix resins for use in prepreg assembly with a variety of substrates.

Benzoxazines themselves have been reported in the literature as generally having a high glass transition temperature, good electrical properties (e.g., dielectric constant), and low flammability.

Blends of epoxy resins and benzoxazines are known. See e.g. U.S. Patent Nos. 4,607,091 (Schreiber), 5,021,484 (Schreiber), 5,200,452 (Schreiber), and 5,445,911 (Schreiber). These blends appear to be potentially useful in the electronics industry, as the epoxy resins can reduce the melt viscosity of benzoxazines allowing for the use of higher filler loading while maintaining a processable viscosity. However, epoxy resins oftentimes undesirably increase the temperature at which benzoxazines polymerize.

Ternary blends of epoxy resins, benzoxazine and phenolic resins are also known. See U.S. Patent No. 6,207,786 (Ishida), and S. Rimdusit and H. Ishida, "Development of new class of electronic packaging materials based on ternary system of benzoxazine, epoxy, and phenolic resin," Polymer, 41, 7941-49 (2000).

Other resins, such as reactive monomers, polymers and oxazolines, polyimide/siloxane co-polymers and cyanate esters, are too known. See e.g. U.S. Patent No. 4,806,267 (Culbertson), in connection with oxazolines and J. McGrath et al., "Synthesis and Characterization of Segmented Polyimide-Polyorganosiloxane Copolymers", Advances in Polym. Sci., Vol. 140, Springer-Verlag, Berlin 61-105 (1999) in connection with polybenzoxazine polyimide-polyorganosiloxane co-polymers.

Moreover, in J. Jang et al., "Performance Improvement of Rubber Modified Polybenzoxazine", J. Appl. Polym. Sci., 67, 1-10 (1998), the authors report the use of polybenzoxazine modified with amine-terminated, butadiene acrylonitrile rubber and with carboxyl-terminated, butadiene acrylonitrile rubber to improve mechanical properties. The polybenzoxazine chosen was synthesized from bisphenol A, formaldehyde and the aromatic amine, aniline.

Recently, Henkel Corporation designed and developed heat curable compositions comprising benzoxazine component of certain defined structures and a toughener component comprising acrylonitrile-butadiene co-polymer having secondary amine terminal groups. In one aspect, cured reaction products of the compositions are capable of demonstrating at least one of a wet Tg of at least 350°F, a toughness measured by GI_{c} of at least 1.9 in-lb./in², a percent decrease in ΔH of at least 15% compared with a benzoxazine prepared from bisphenol F and aniline, and a percent decrease in wet Tg compared with dry Tg with increased toughener concentration of less than 6%. In another aspect, with certain benzoxazines, cured reaction products of the compositions Tg and toughness measured by GI_{c} increase as the amount of toughener in the composition increases. See U.S. Patent Application Publication No. US 2004/261660.

Notwithstanding the state of the technology, there remains an unmet need in the marketplace for a heat curable composition based on the combination of a benzoxazine prepared from bisphenol A, formaldehyde and alkyl amines, and core shell rubber.

### SUMMARY OF THE INVENTION

The invention provides heat curable compositions, which include the combination of a benzoxazine component and a core shell rubber.

The core shell rubber is present as;nano sized particles generally having a core comprised of a polymeric material having elastomeric or rubbery properties surrounded by a shell comprised of a non-elastomeric polymeric material.

In one aspect, the invention provides a benzoxazine component comprising 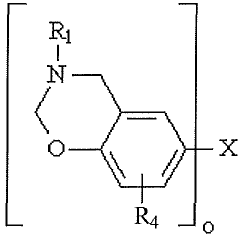 where o is 1-4, X is a direct bond (when o is 2), alkyl (when o is 1), alkylene (when o is 2-4), carbonyl (when o is 2), thiol (when o is 1), thioether (when o is 2), sulfoxide (when o is 2), and sulfone (when o is 2), and R₁ is alkyl, such as methyl, ethyl, propyls and butyls, or 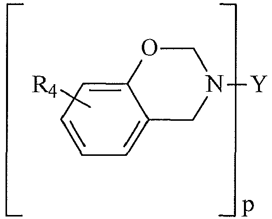 where p is 2, Y is selected from biphenyl (when p is 2), diphenyl methane (when p is 2), diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from hydrogen, halogen, alkyl and alkenyl; and a core shell rubber.

In a more specific embodiment of that aspect of the invention, the benzoxazine component is embraced by 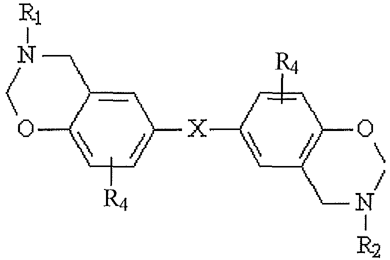 and the heat curable composition may optionally further comprise one or more of: 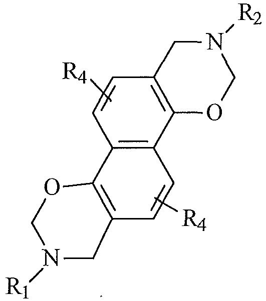 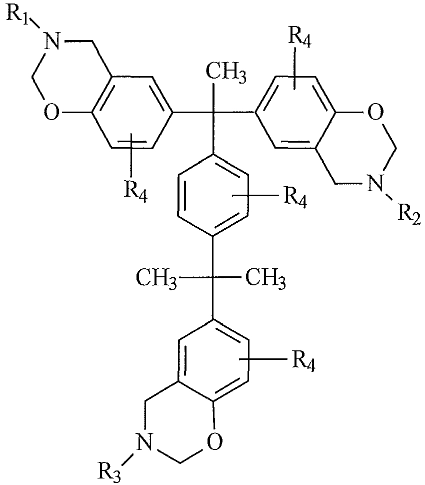 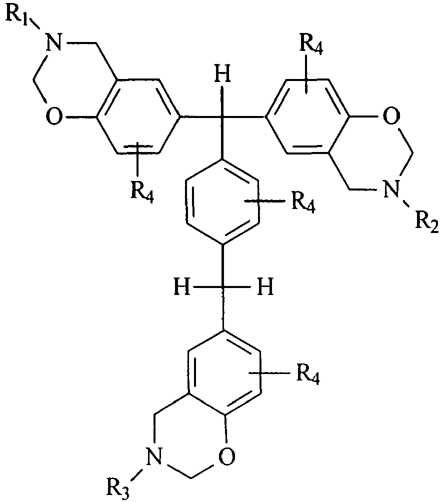 where X is selected from a direct bond, CH₂, C(CH₃)₂, C=O, S, S=O and O=S=O, and R₁, R₂, and R₃ are the same or different and alkyl, such as methyl, ethyl, propyls and butyls and R₄ are selected from hydrogen, alkyl, alkenyl and aryl.

In a more particular embodiment, the benzoxazine is embraced by 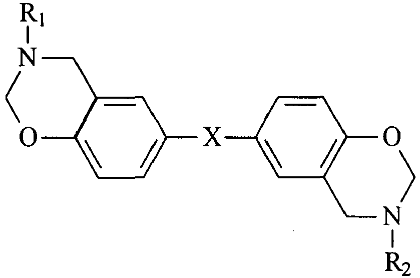 where X is selected from a direct bond, CH₂, C(CH₃)₂, C=O, S, S=O and O=S=O, and R₁ and R₂ are the same or different and are selected from methyl, ethyl, propyls and butyls.

In yet a more specific embodiment of that aspect of the invention, the benzoxazine component is embraced by 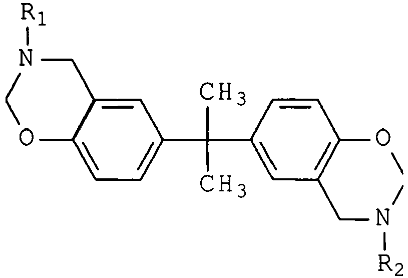 where R₁ and R₂ are the same or different and are selected from methyl, ethyl, propyls and butyls, though in a particularly desirable embodiment R₁ and R₂ are each methyl.

The invention is further directed to prepregs of the inventive compositions and cured reaction products thereof, prepregs of the inventive compositions and cured reaction products thereof, towpregs of the inventive compositions and cured reaction products thereof, and processes for producing the prepregs and towpregs, adhesive compositions of the inventive compositions and films thereof, methods of preparing and using the inventive compositions, articles of manufacture assembled with the inventive compositions and the like.

### DETAILED DESCRIPTION OF THE INVENTION

As noted above, the present invention provides heat curable compositions, which include the combination of a benzoxazine component and a core shell rubber.

In one aspect, the invention provides a benzoxazine component comprising 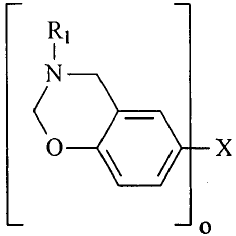 where o is 1-4, X is a direct bond (when o is 2), alkyl (when o is 1), alkylene (when o is 2-4), carbonyl (when o is 2), thiol (when o is 1), thioether (when o is 2), sulfoxide (when o is 2), and sulfone (when o is 2), and R₁ is alkyl, such as methyl, ethyl, propyls and butyls, or 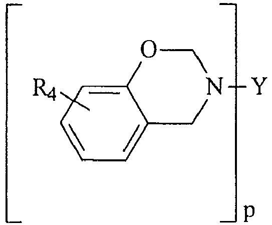 where p is 2, Y is selected from biphenyl (when p is 2), diphenyl methane (when p is 2), diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from hydrogen, halogen, alkyl and alkenyl; and a core shell rubber.

In a more specific embodiment of that aspect of the invention, the benzoxazine component is embraced by one or more of 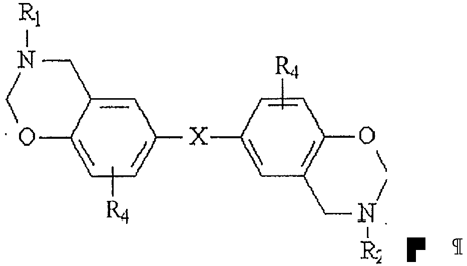 and the heat curable composition may optionally further comprise one or more of: 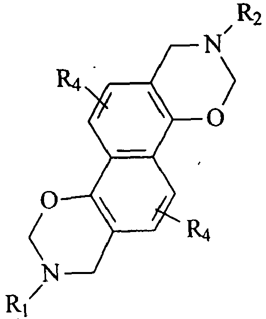 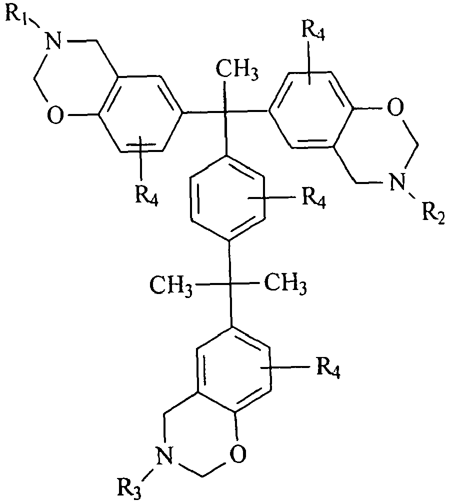 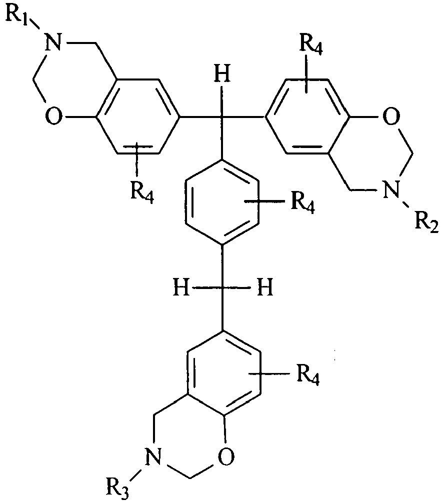 where X is selected from a direct bond, CH₂, C(CH₃)₂, C=O, S, S=O and O=S=O, and R₁, R₂, R₃ and R₄ are the same or different and are selected from hydrogen, alkyl, alkenyl and aryl.

In a more particular embodiment, the benzoxazine is embraced by 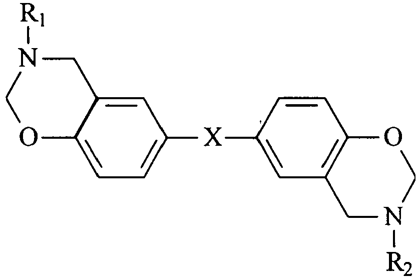 where X is selected from the group consisting of a direct bond, CH₂, C(CH₃)₂, C=O, S=O and O=S=O, S, and R₁ and R₂ are the same or different and are selected from methyl, ethyl, propyls and butyls.

In yet a more specific embodiment of that aspect of the invention, the benzoxazine component is embraced by 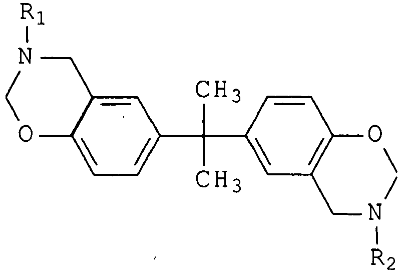 where R₁ and R₂ are the same or different and are selected from methyl, ethyl, propyls and butyls, though in a particularly desirable embodiment R₁ and R₂ are each methyl.

Specific examples of benzoxazines useful herein include one or more of

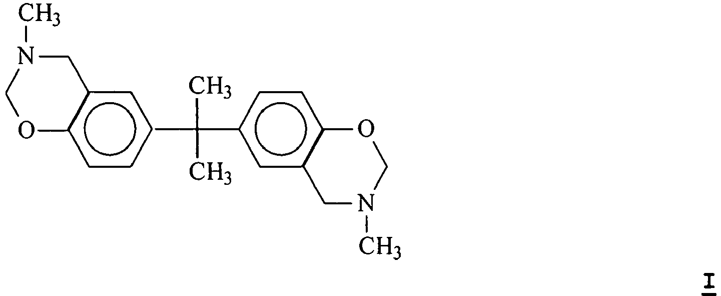

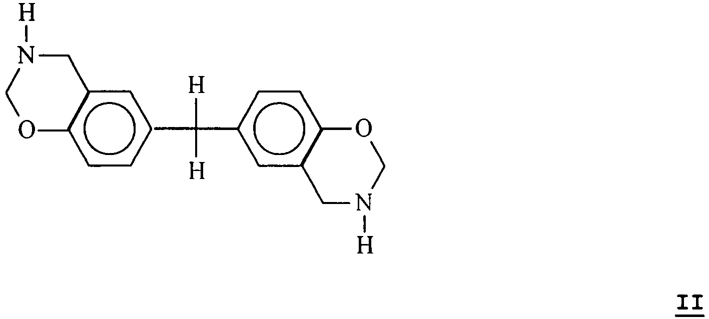

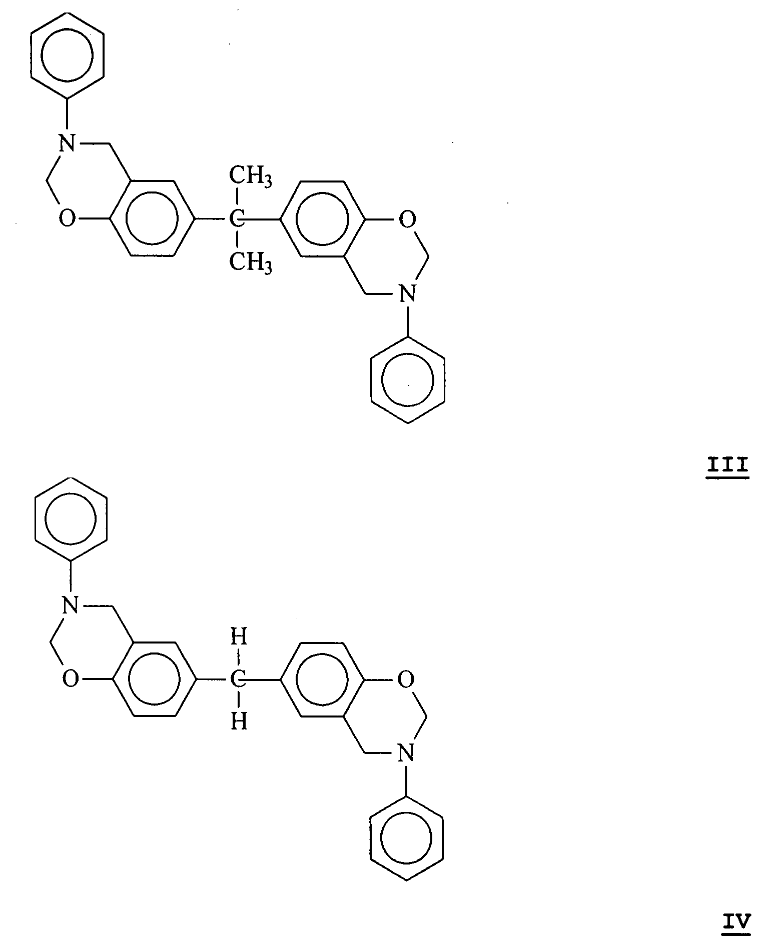

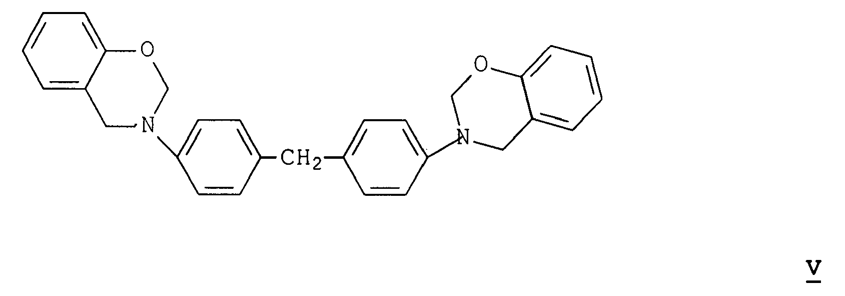

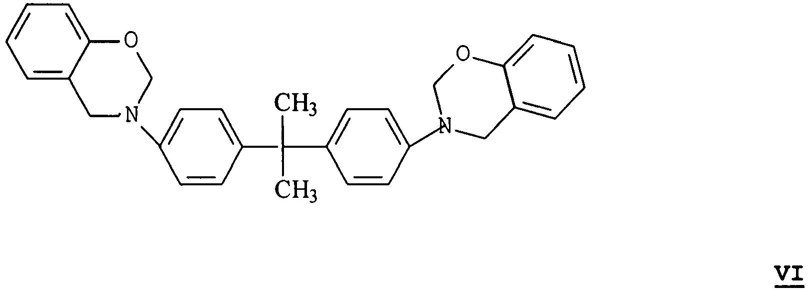

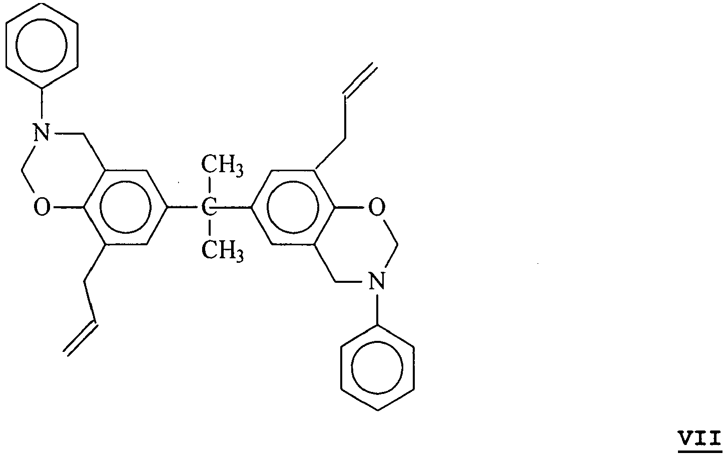

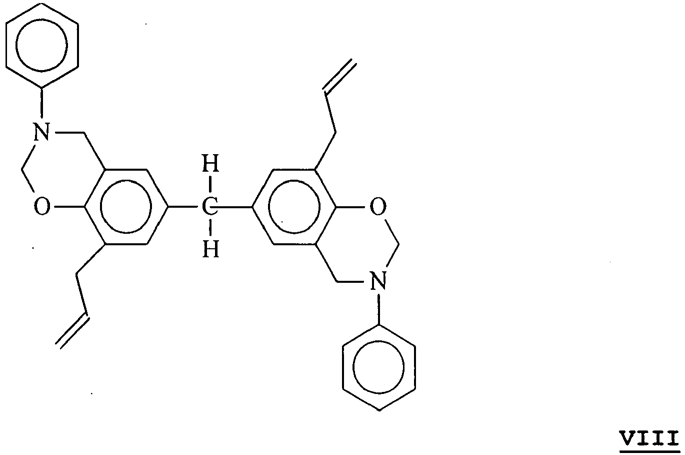

The benzoxazine component of the present invention may typically be prepared by reacting a phenolic compound, such as a bisphenol A, bisphenol F, bisphenol S or thiodiphenol, with an aldehyde and an alkyl amine. U.S. Patent No. 5,543,516 describes a method of forming benzoxazines, where the reaction time can vary from a few minutes to a few hours, depending on reactant concentration, reactivity and temperature. See also Burke et al., J. Org. Chem., 30(10), 3423 (1965); see generally U.S. Patent Nos. 4,607,091 (Schreiber), 5,021,484 (Schreiber), 5,200,452 (Schreiber) and 5,443,911 (Schreiber).

Benzoxazines are presently available from several sources commercially, including Huntsman Specialty Chemicals, Inc., Brewster, New York, Georgia-Pacific Resins, Inc. and Shikoku Chemicals Corporation, Chiba, Japan, the least of which offers among others B-a, B-m, C-a and F-a benzoxazine resins. Of these, the benzoxazine component of the present invention is oftentimes desirably within the B-m benzoxazine resin family.

Benzoxazine polymerization can also be initiated by cationic initiators, such as Lewis acids, and other known cationic initiators, such as metal halides; organometallic derivatives; metallophorphyrin compounds such as aluminum phthalocyanine chloride; methyl tosylate, methyl triflate, and triflic acid; and oxyhalides.

The benzoxazine component should be present in an amount in the range of 10 to 99 percent by weight, such as 25 to 75 percent by weight, desirably 35 to 65 percent by weight, based on the total weight of the composition.

The invention also includes core shell rubbers.

Rubber particles having a core-shell structure are an additional component of the compositions of the present invention. Such particles generally have a core comprised of a polymeric material having elastomeric or rubbery properties (i.e., a glass transition temperature less than about 0°C, e.g., less than about -30°C) surrounded by a shell comprised of a non-elastomeric polymeric material (i.e., a thermoplastic or thermoset/crosslinked polymer having a glass transition temperature greater than ambient temperatures, e.g., greater than about 50°C). For example, the core may be comprised of a diene homopolymer or copolymer (for example, a homopolymer of butadiene or isoprene, a copolymer of butadiene or isoprene with one or more ethylenically unsaturated monomers such as vinyl aromatic monomers, (meth)acrylonitrile, (meth)acrylates, or the like) while the shell may be comprised of a polymer or copolymer of one or more monomers such as (meth)acrylates (e.g., methyl methacrylate), vinyl aromatic monomers (e.g., styrene), vinyl cyanides (e.g., acrylonitrile), unsaturated acids and anhydrides (e.g., acrylic acid), (meth)acrylamides, and the like having a suitably high glass transition temperature. Other rubbery polymers may also be suitably be used for the core, including polybutylacrylate or polysiloxane elastomer (e.g., polydimethylsiloxane, particularly crosslinked polydimethylsiloxane). The rubber particle may be comprised of more than two layers (e.g., a central core of one rubbery material may be surrounded by a second core of a different rubbery material or the rubbery core may be surrounded by two shells of different composition or the rubber particle may have the structure soft core, hard shell, soft shell, hard shell). In one embodiment of the invention, the rubber particles used are comprised of a core and at least two concentric shells having different chemical compositions and/or properties. Either the core or the shell or both the core and the shell may be crosslinked (e.g., ionically or covalently). The shell may be grafted onto the core. The polymer comprising the shell may bear one or more different types of functional groups (e.g., epoxy groups) that are capable of interacting with other components of the compositions of the present invention.

Typically, the core will comprise from 50 to 95 percent by weight of the rubber particles while the shell will comprise from 5 to 50 percent by weight of the rubber particles.

The core shell rubber particles are on the nano scale size. That is, the rubber particles have an average diameter of less than 500 nm, such as less than 200 nm, desirably in the range of 25 to 100 nm.

Methods of preparing rubber particles having a core- shell structure are well-known in the art and are described, for example, in U.S. Patent Nos. 4,419,496,4,778,851, 5,981,659, 6,111,015, 6,147,142 and 6,180,693.

Rubber particles having a core-shell structure may be prepared as a masterbatch where the rubber particles are dispersed in one or more epoxy resins such as a diglycidyl ether of bisphenol A. For example, the rubber particles typically are prepared as aqueous dispersions or emulsions. Such dispersions or emulsions may be combined with the desired epoxy resin or mixture of epoxy resins and the water and other volatile substances removed by distillation or the like. One method of preparing such masterbatches is described in more detail in International Patent Publication No. WO 2004/108825. For example, an aqueous latex of rubber particles may be brought into contact with an organic medium having partial solubility in water and then with another organic medium having lower partial solubility in water than the first organic medium to separate the water and to provide a dispersion of the rubber particles in the second organic medium. This dispersion may then be mixed with the desired epoxy resin (s) and volatile substances removed by distillation or the like to provide the masterbatch.

Particularly suitable dispersions of rubber particles having a core-shell structure in an epoxy resin matrix are available from Kaneka Corporation, such as Kaneka MX-120 (masterbatch of 25 weight % nano-sized core-shell rubber in a diglycidyl ether of bisphenol A matrix) and Kaneka MX-156.

For instance, the core may be formed predominantly from feed stocks of polybutadiene, polyacrylate, polybutadiene/acrylonitrile mixture, polyols and/or polysiloxanes or any other monomers that give a low glass transition temperature.

The outer shells may be formed predominantly from feed stocks of polymethylmethacrylate, polystyrene or polyvinyl chloride or any other monomers that give a higher glass transition temperature.

The core shell rubber made in this way are may be dispersed in an epoxy matrix or a phenolic matrix.

Examples of epoxy matrices include the diglycidyl ethers of bisphenol A, F or S, or biphenol, novalac epoxies, epoxidized nitrogenous based amines, and cycloaliphatic epoxies. Examples of phenolic resins include bisphenol-A based phenoxies.

The core shell rubber may be dispersed in the epoxy or phenolic matrix in an amount in the range of 5 to 50% by weight, with 15 to 25% by weight being desirable on viscosity considerations.

At the higher ranges of this core shell rubber content, viscosity increases may be observed in the dispersion in relatively short periods of time and agglomeration, settling and gelling may also be observed in the dispersions.

In the inventive formulations, use of these core shell rubbers allows for toughening to occur in the formulation as it cures, irrespective of the temperatures used to cure the formulation. That is, because of the two phase separation inherent in the formulation due to the core shell rubber - as contrasted for instance with a liquid rubber that is miscible or partially miscible in the formulation and can solidify at temperatures different than those used to cure the formulation -- there is a minimum disruption of the matrix properties, as the two phase separation in the formulation is often observed to be substantially uniform in nature.

In addition, predictable toughening -- in terms of temperature neutrality toward cure -- may be achieved because of the substantial uniform dispersion.

Many of the core-shell rubber structures available from Kaneka are believed to have a core made from a copolymer of (meth)acrylate-butadiene-styrene, where the butadiene is the primary component in the phase separated particles, dispersed in epoxy resins. Other commercially available masterbatches of core-shell rubber particles dispersed in epoxy resins include GENIOPERL M23A (a dispersion of 30 weight percent core-shell particles in an aromatic epoxy resin based on bisphenol A diglycidyl ether; the core-shell particles have an average diameter of ca. 100 nm and contain a crosslinked silicone elastomer core onto which an epoxy-functional acrylate copolymer has been grafted); the silicone elastomer core represents about 65 weight percent of the core-shell particle), available from Wacker Chemie GmbH, Germany.

The core shell rubber should be present in an amount in the range of about 1 to about 90 percent by weight, such as about 10 to about 70 percent by weight, desirably about 15 to about 30 percent by weight, based on the total weight of the composition.

The inventive compositions may also include coreactants, curatives and/or catalysts for the benzoxazines component. Examples include Lewis acids, such as phenols and derivatives thereof, strong acids, such as alkylenic acids and cationic catalysts.

The inventive compositions may also include inorganic fillers, such as silicas. For instance, the inventive composition may also include an additional silica nanoparticle component. The silica nanoparticles can be pre-dispersed in epoxy resins, and may be selected from those commercially available under the tradename NANOPOX, such as NANOPOX XP 0314, XP 0516, XP 0525, from Hanse Chemie, Germany. These NANOPOX-brand products are silica nanoparticle dispersions in epoxy resins, at a level of up to about 50% by weight. These NANOPOX-brand products are believed to have a particle size of about 5 nm to about 80 nm. NANOPOX XP 0314 is reported by the manufacturer to contain 40 weight percent of silica particles having a particle size of less than 50 nm diameter in a cycloaliphatic epoxy resin. The invention relates also to prepregs formed from a layer of fibers infused with the inventive heat curable composition.

In this regard, the invention relates also to processes for producing a prepreg. One such process includes the steps of (a) providing a layer of fibers; (b) providing the inventive heat curable composition; and (c) joining the heat curable composition and the layer of fibers to form a prepreg assembly, and exposing the resulting prepreg assembly to elevated temperature and pressure conditions sufficient to infuse the layer of fibers with the heat curable composition to form a prepreg.

Another such process for producing a prepreg, includes the steps of (a) providing a layer of fibers; (b) providing the inventive heat curable composition in liquid form; (c) passing the layer of fibers through the liquid heat curable composition to infuse the layer of fibers with the heat curable composition; and (d) removing excess heat curable composition from the prepreg assembly.

The fiber layer may be constructed from unidirectional fibers, woven fibers, chopped fibers, non-woven fibers or long, discontinuous fibers.

The fiber chosen may be selected from carbon, glass, aramid, boron, polyalkylene, quartz, polybenzimidazole, polyetheretherketone, polyphenylene sulfide, poly p-phenylene benzobisoaxazole, silicon carbide, phenolformaldehyde, phthalate and napthenoate.

The carbon is selected from polyacrylonitrile, pitch and acrylic, and the glass is selected from S glass, S2 glass, E glass, R glass, A glass, AR glass, C glass, D glass, ECR glass, glass filament, staple glass, T glass and zirconium oxide glass.

The invention further contemplates a towpreg formed from a bundle of such fibers infused with the inventive heat curable composition.

In this regard, the invention relates also to processes for producing a towpreg. In one such process, the steps include (a) providing a bundle of fibers; (b) providing the heat curable composition and (c) joining the heat curable composition and the bundle of fibers to form a towpreg assembly, and exposing the resulting towpreg assembly to elevated temperature and pressure conditions sufficient to impregnate the bundle of fibers with the heat curable composition to form a towpreg.

In another such process, the steps include (a) providing a bundle of fibers; (b) providing the inventive heat curable composition in liquid form; (c) passing the bundle of fibers through the liquid heat curable composition to impregnate the bundle of fibers with the heat curable composition; and (d) removing excess heat curable composition from the towpreg assembly, thereby forming the towpreg.

The invention also contemplates usage as a mtrix resin for advanced processes, such as resin transfer molding ("RTM"), from vacuum assisted resin transfer molding ("VaRTM"), and resin film infusion ("RFI"). RTM is a process by which a resin - conventionally and predominately, epoxy-based resin systems and maleimide-based systems -- is pumped at low viscosities and under pressure into a closed mold die set containing a preform of dry fabric. The resin infuses into the preform to make a fiber-reinforced composite article. The RTM process can be used to produce at low cost composite parts that are complex in shape. These parts typically require continuous fiber reinforcement along with inside mold line and outside mold line controlled surfaces.

Fiber-reinforced composite articles may be manufactured using VaRTM. However, in contrast to RTM, VaRTM employs an open mold and places the system under a vacuum to assist the resin infusion process.

RFI, like RTM, infuses a resin into a preform placed in a mold. Here, however, the resin is in the form of a film, which is placed in the mold together with the preform. U.S. Patent No. 5,902,535 speaks to RFI molds and processes.

The matrix resin used in the RTM and VaRTM advanced processes should desirably have a low injection viscosity to allow complete wetting and infusion of the preform.

The inventive composition may if desired also include a toughener, examples of which include poly (propylene) oxide; hydroxy-terminated polyethylene sulfide, such as PES 5003P, available commercially from Sumitomo Chemical Company, Japan; core shell polymers, such as PS 1700, available commercially from Union Carbide Corporation, Danbury, Connecticut; and BLENDEX 338, SILTEM STM 1500 and ULTEM 2000, which are available commercially from General Electric Company. ULTEM 2000 (CAS Reg. No. 61128-46-9) is a polyetherimide having a molecular weight ("Mw") of about 30,000 ± 10,000.

The inventive composition may be in the form of an adhesive, in which case one or more of an adhesion promoter, a flame retardant, a filler (such as the inorganic filler noted above, or a different one), a thermoplastic additive, a reactive or non-reactive diluent, and a thixotrope should be included. In addition, the inventive adhesive may be placed in film form, in which case a support constructed from nylon, glass, carbon, polyester, polyalkylene, quartz, polybenzimidazole, polyetheretherketone, polyphenylene sulfide, poly p-phenylene benzobisoaxazole, silicon carbide, phenolformaldehyde, phthalate and napthenoate should be included.

Compositions of the present invention may ordinarily be cured by heating to a temperature in the range of about 120 to about 180°C for a period of time of about 30 minutes to 4 hours. Thus, the inventive compositions can be used at relatively moderate temperatures to achieve very good productivity.

The inventive compositions (and pregregs and towpregs prepared therefrom) are particularly useful in the manufacture and assembly of composite parts for aerospace and industrial end uses, bonding of composite and metal parts, core and core-fill for sandwich structures and composite surfacing.

The invention also provides a process for producing a heat curable composition. The steps of this process includes:
(a) providing a benzoxazine comprising 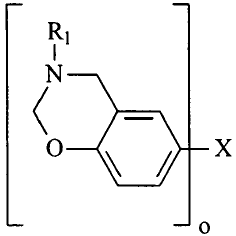 where o is 1-4, X is a direct bond (when o is 2), alkyl (when o is 1), alkylene (when o is 2-4), carbonyl (when o is 2), thiol (when O is 1), thioether (when o is 2), sulfoxide (when o is 2), sulfone (when O is 2) and R₁ is alkyl, or 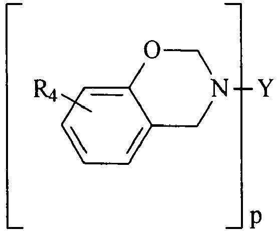 where p is 2, Y is selected from biphenyl (when p is 2), diphenyl methane (when p is 2), diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from hydrogen, halogen, alkyl and alkenyl;
(b) providing a core shell rubber; and
(c) mixing the benzoxazine and the core shell rubber under conditions appropriate to produce the heat curable composition.

This invention is further illustrated by the following representative examples.

### EXAMPLES

Here, a series of samples were prepared from benzoxazine and epoxy, core shell rubber, nano particle silica and/or epoxidized para-aminophenol, as shown below in Tables 1a and 1b. Sample Nos. 1, 4 and 7 are presented as controls without a core shell rubber against Sample Nos. 2-3, 5-6 and 8, respectively.

**Table 1a**

| **Components** | | **Sample No./ Amt. (parts)** | | | |
|---|---|---|---|---|---|
| | | **1** | **2** | **3** | **4** |
| **Benzoxazine**¹ | **V** | 75 | 64.5 | 64.25 | 75 |
| Core Shell Rubber | | -- | 10 | 5 | -- |
| Epoxy | CY-179 | 25 | 25.5 | 25.95 | 7 |
| | EPON 825 | -- | -- | -- | -- |
| Silica Nanoparticle | XP 0314 | -- | -- | 4.8 | -- |
| MY-0510* | | -- | -- | -- | 18 |

**Table 1b**

| **Components** | | **Sample No./ Amt. (parts)** | | | |
|---|---|---|---|---|---|
| | | 5 | 6 | 7 | 8 |
| Benzoxazine¹ | **V** | 64.5 | 64.25 | 75 | 64.5 |
| Core Shell Rubber | | 10 | 5 | -- | 10 |
| Epoxy | CY-179 | 7.5 | 10.95 | 7 | 7.5 |
| | EPON 825 | -- | -- | 18 | 18 |
| Silica Nanoparticle | XP 0314 | -- | 4.8 | -- | -- |
| MY-0510* | | 18 | 15 | -- | -- |

| | | | | | |
|---|---|---|---|---|---|
| ¹ The benzoaxzine also includes monofunctional benzoxazine. * Epoxidized para aminophenol, commercially available from Huntsman Specialty Chemical. | | | | | |

Each of the samples was prepared as follows:
The benzoxazine was warmed at a temperature of 71°C (160°F) to render it flowable, without initiating curing.

The remaining components were added to a speedmixer container, and heated with mixing at a temperature of 71°C (160°F) for a period of time of 15 minutes at a mix speed of 2400 rpm until a substantially homogenous composition was observed to form. The so formed composition was poured directly into a mold prior to cure.

Thus, the samples noted in Tables Ia and Ib were exposed to 621 kPa (90 psi) pressure within the autoclave and the temperature therein was increased at a 3°C/min (5°F/min) ramp rate to a temperature of 180°C (356°F), for a period of time of about 2 hours.
The cured samples were then cooled to a temperature of about 32.2°C (90°F) in the mold at a 3°C (5°F/min) ramp rate for a period of time of about 1 hour before use or evaluation.

The cured samples were evaluated using the following property tests:

Dynamic mechanical thermal analysis ("DMTA") was performed on cured samples using a double cantilever fixture. The cured samples were isothermally equilibrated at a temperature of 40°C in an oven and the temperature was increased at a 5°C/min ramp rate to a temperature of 250°C. Tg values were obtained from this DMTA evaluation from onset G', storage shear modulus.

The cured samples were also subjected to boiling water for 3 days, and weight gain was recorded. Tg values were obtained from these samples using a DMTA evaluation.

Density of uncured and cured samples was measured according to ASTM D 792, and cure shrinkage was then calculated.

Flexure strength and modulus was determined in accordance with ASTM D 790, using cured samples with the following specimen dimensions: 0.32 x 1.27 x 10.16 cm (0.125 x 0.5 x 4 in)., span 5.08 cm (2 in.), test speed: 0.127 cm/min (0.05 in./min).

GIC was determined in accordance with ASTM D5045-96, using single edge notch bending ("SENB") specimens of the cured samples.

The results of these evaluations on Sample Nos. 1-8 are set forth below in Tables 2a and 2b.

**Table 2a**

| **Properties** | **Sample No.** | | | |
|---|---|---|---|---|
| | **1** | **2** | **3** | **4** |
| ΔH, J/g | -- | -367 | -359 | -395 |
| Cured Density | -- | 1.19 | 1.22 | - |
| Tg, °C | 203 | 195 | 196 | 184 |
| Hot / Wet Tg, °C | 168 | 167 | 168 | 163 |
| Moisture uptake | 2.3 | 2.2 | 2.4 | 2 |
| G IC, J/m² (in-lb./in²) | 102 (0.58) | 249 (1.42) | 219 (1.25) | 77 (0.44) |
| Flexure Strength, MPa (Ksi) | 68.3 (9.9) | 152 (22.1) | 174 (25.2) | 118 (17.1) |
| Flexure Modulus, Mpsi | 4054 (0.588) | 3785 (0.549) | 4192 (0.608) | 4495 (0.652) |

**Table 2b**

| **Properties** | **Sample No.** | | | |
|---|---|---|---|---|
| | **5** | **6** | **7** | **8** |
| ΔH, J/g | -404 | -406 | -438 | -377 |
| Cured Density | 1.20 | 1.25 | -- | -- |
| Tg, °C | 170 | 177 | 187 | 185 |
| Hot/Wet Tg, °C | 152 | 160 | 159 | 164 |
| Moisture uptake | 1.9 | 2.1 | 1.7 | 1.9 |
| GIC, J/m² (in-lb./in²) | 347 (1.98) | 244 (1.39) | 107 (0.61) | 265 (1.51) |
| Flexure Strength, MPa (Ksi) | 142 (20.6) | 153 (22.2) | 74 (12.3) | 139 (20.1) |
| Flexure Modulus, MPa (Mpsi) | 3503 (0.508) | 4351 (0.631) | 4082 (0.592) | 3468 (0.503) |

In comparing these results from Sample Nos. 1-8, it is clear that Tg did not change appreciably by the addition of core shell rubber in the benzoxazine composition. Also, fracture toughness in terms of GIC increased over two fold, and in some cases nearly three- fold by the inclusion of core shell rubber. And flexure strength is shown to increase from about 20% to about 120% by the addition of a core shell rubber.

In conjunction with the core shell rubber, silica nanoparticles, for example, NANOPOX XP 0314 have shown that the modulus lost by addition of core shell rubber alone can be regained by the addition of the silica nanoparticles.

## Claims

1. A heat curable composition comprising:
(a) a benzoxazine component comprising one or more of 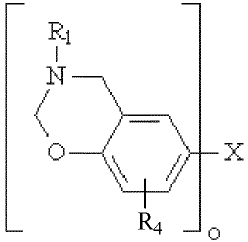 wherein o is 1-4, X is selected from the group consisting of a direct bond (when o is 2), alkyl (when o is 1), alkylene (when o is 2-4), carbonyl (when o is 2), thiol (when o is 1), thioether (when o is 2), sulfoxide (when o is 2), and sulfone (when o is 2), R₁ is selected from the group consisting of hydrogen, alkyl, and aryl, and R₄ is selected from hydrogen, halogen, alkyl, and alkenyl, or 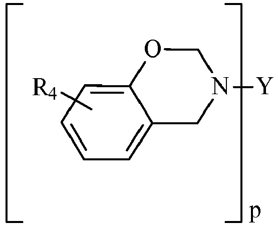 wherein p is 2, Y is selected from the group consisting of biphenyl (when p is 2), diphenyl methane (when p is 2), diphenyl isopropane (when p is 2), diphenyl sulfide (when p is 2), diphenyl sulfoxide(when p is 2), diphenyl sulfone (when p is 2), and diphenyl ketone (when p is 2), and R₄ is selected from the group consisting of hydrogen, halogen, alkyl and alkenyl; and
(b) core shell rubber particles having an average diameter of less than 500 nm and of which the core is comprised of a polymeric material having elastomeric or rubbery properties, said core being surrounded by a shell comprised of a non-elastomeric polymeric material.

2. The heat curable composition of Claim 1, wherein the core shell rubber particles have a core being predominantly a polybutadiene/styrene blend.

3. The heat curable composition of Claim 1 or Claim 2, wherein the core shell rubber particles have an average diameter of from 25 to 100nm.

4. The heat curable composition of any one of Claims 1 to 3, wherein the benzoxazine comprises 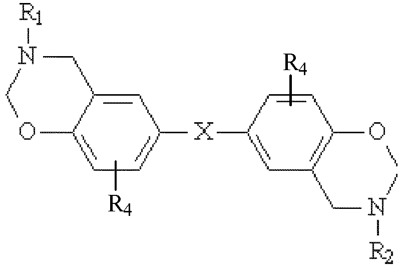 wherein X is selected from the group consisting of a direct bond, CH₂, C(CH₃)₂, C=O, S, S=O and O=S=O, and R₁, R₂, and R₄ are the same or different and are selected from the group consisting of hydrogen, alkyl, alkenyl and aryl.

5. The heat curable composition of any of Claims 1 to 4, wherein the benzoxazine comprises one or more of

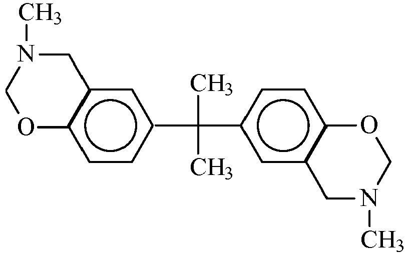

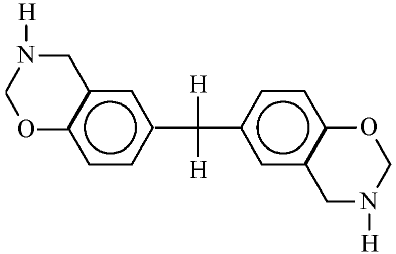

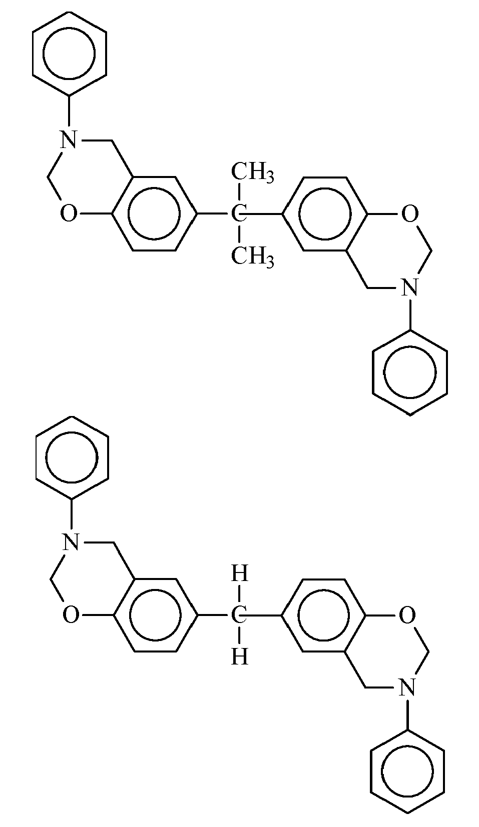

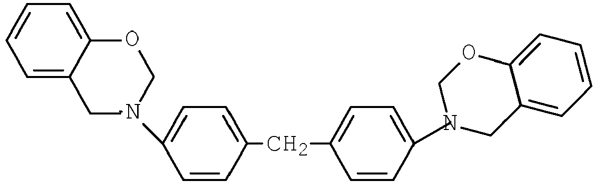

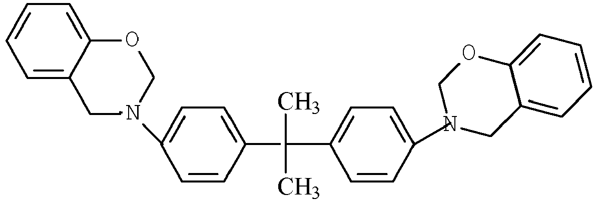

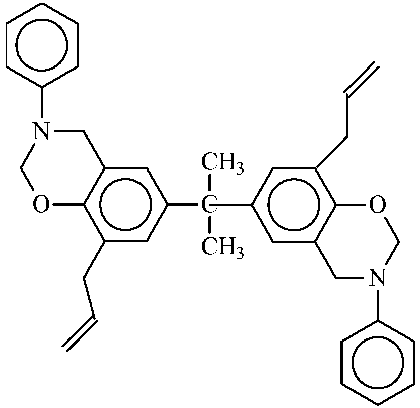

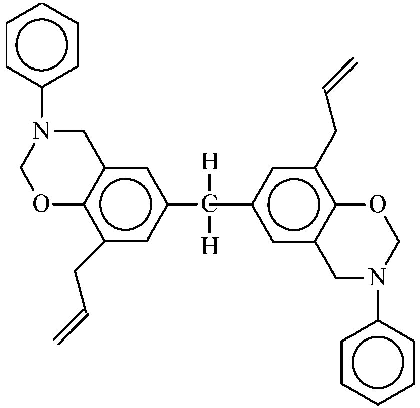

6. The heat curable composition of any of Claims 1 to 5 further comprising an inorganic filler component, wherein the inorganic filler component comprises a silica nanoparticle.

7. A process for producing a prepreg, steps of which comprise:
(a) providing a layer of fibers;
(b) providing the heat curable composition of any of Claims 1 to 6; and
(c) joining the heat curable composition and the layer of fibers to form a prepreg assembly, and exposing the resulting prepreg assembly to elevated temperature and pressure conditions sufficient to infuse the layer of fibers with the heat curable composition to form a prepreg.

8. A process for producing a prepreg, steps of which comprise:
(a) providing a layer of fibers;
(b) providing the heat curable composition of any of Claims 1 to 6 in liquid form;
(c) passing the layer of fibers through the liquid heat curable composition to infuse the layer of fibers with the heat curable composition; and
(d) removing excess heat curable composition from the prepreg assembly.

9. A process for producing a towpreg, steps of which comprise:
(a) providing a bundle of fibers;
(b) providing the heat curable composition of any of Claims 1 to 6; and
(c) joining the heat curable composition and the bundle of fibers to form a towpreg assembly, and exposing the resulting towpreg assembly to elevated temperature and pressure conditions sufficient to impregnate the bundle of fibers with the heat curable composition to form a towpreg.

10. A process for producing a towpreg, steps of which comprise:
(a) providing a bundle of fibers;
(b) providing the heat curable composition of any of Claims 1 to 6 in liquid form;
(c) passing the bundle of fibers through the liquid heat curable composition to impregnate the bundle of fibers with the heat curable composition; and
(d) removing excess heat curable composition from the towpreg assembly, thereby forming a towpreg.

11. An adhesive composition comprising the heat curable composition of any of Claims 1 to 6.

12. The adhesive composition of Claim 11, further comprising one or more of an adhesion promoter, a flame retardant, a filler, a thermoplastic additive, a reactive or unreactive diluent, and a thixotrope.

13. Cured reaction product of the adhesive composition of Claim 11 or Claim 12.

## Patentansprüche

1. Wärmehärtbare Zusammensetzung, Folgendes umfassend:
(a) ein Benzoxazin-Bestandteil, umfassend eines oder mehrere der Folgenden: 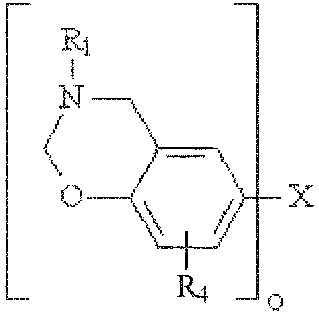 wobei o 1-4 ist, X ausgewählt ist aus der Gruppe bestehend aus einer Direktbindung (wenn o 2 ist), einem Alkyl (wenn o 1 ist), Alkylen (wenn o 2-4 ist), Carbonyl (wenn o 2 ist), Thiol (wenn o 1 ist), Thioether (wenn o 2 ist), Sulfoxid (wenn o 2 ist) und Sulfon (wenn o 2 ist), R₁ ausgewählt ist aus der Gruppe bestehend aus Wasserstoff, Alkyl und Aryl und R₄ ausgewählt ist aus Wasserstoff, Halogen, Alkyl und Alkenyl, oder 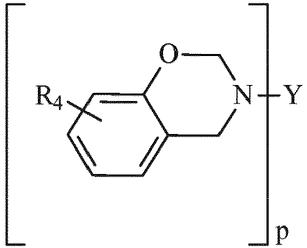 wobei p 2 ist, Y ausgewählt ist aus der Gruppe bestehend aus Biphenyl (wenn p 2 ist), Diphenylmethan (wenn p 2 ist), Diphenylisopropan (wenn p 2 ist), Diphenylsulfid (wenn p 2 ist), Diphenylsulfoxid (wenn p 2 ist), Diphenylsulfon (wenn p 2 ist) und Diphenylketon (wenn p 2 ist) und R₄ ausgewählt ist aus der Gruppe bestehend aus Wasserstoff, Halogen, Alkyl und Alkenyl; und
(b) Kern-Hülle-Kautschuk-Partikel mit einem durchschnittlichen Durchmesser von weniger als 500 nm und von denen der Kern aus einem Polymermaterial mit elastomeren oder kautschukartigen Eigenschaften besteht, wobei der Kern von einer Hülle umgeben ist, die aus einem nicht elastomeren Polymermaterial besteht.

2. Wärmehärtbare Zusammensetzung nach Anspruch 1, wobei die Kern-Hülle-Kautschuk-Partikel einen Kern aufweisen, der vorwiegend eine Polybutadien-Styrol-Mischung ist.

3. Wärmehärtbare Zusammensetzung nach Anspruch 1 oder 2, wobei die Kern-Hülle-Kautschuk-Partikel einen durchschnittlichen Durchmesser von 25 bis 100 nm aufweisen.

4. Wärmehärtbare Zusammensetzung nach einem der Ansprüche 1 bis 3, wobei das Benzoxazin Folgendes umfasst: 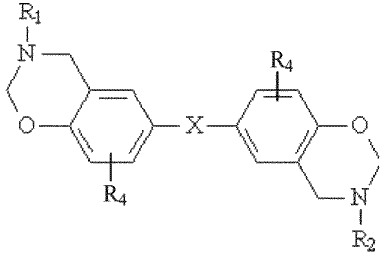 wobei X ausgewählt ist aus der Gruppe bestehend aus einer Direktbindung, CH₂, C(CH₃)₂, C=O, S, S=O und O=S=O, und R₁, R₂ und R₄ gleich oder verschieden sind und ausgewählt sind aus der Gruppe bestehend aus Wasserstoff, Alkyl, Alkenyl und Aryl.

5. Wärmehärtbare Zusammensetzung nach einem der Ansprüche 1 bis 4, wobei das Benzoxazin eines oder mehrere der Folgenden umfasst:

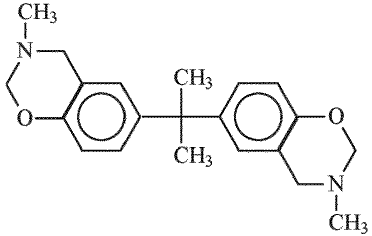

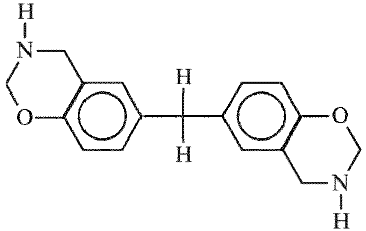

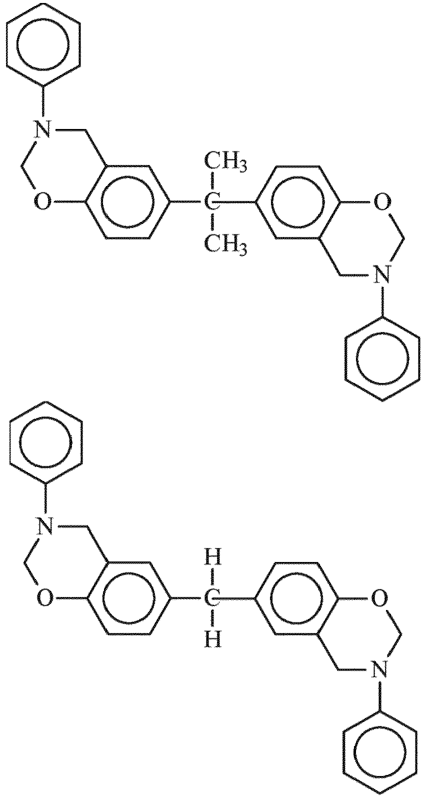

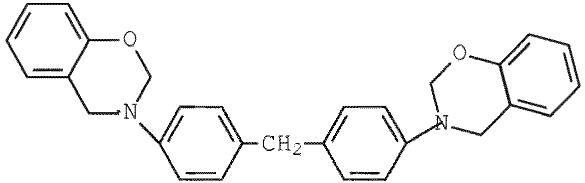

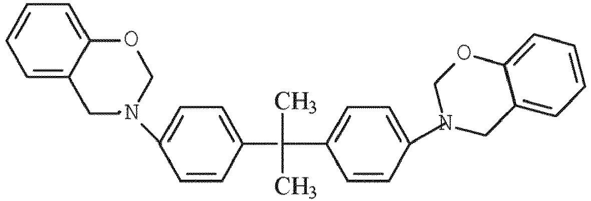

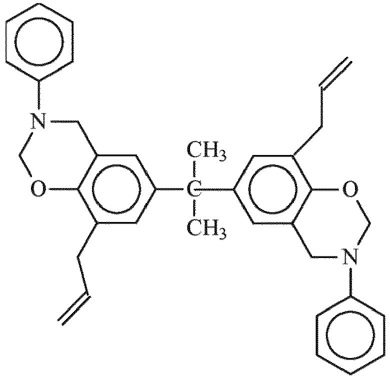

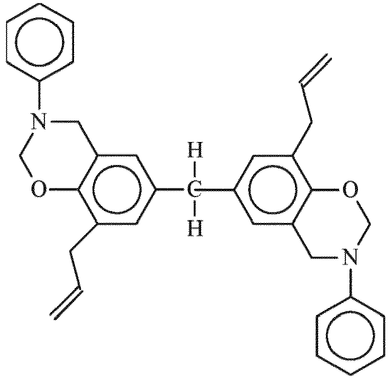

6. Wärmehärtbare Zusammensetzung nach einem der Ansprüche 1 bis 5, ferner umfassend eine anorganische Füllstoffkomponente, wobei die anorganische Füllstoffkomponente ein Siliciumdioxid-Nanopartikel umfasst.

7. Vorgang zum Herstellen eines Prepregs, dessen Schritte Folgendes umfassen:
(a) Bereitstellen einer Schicht aus Fasern;
(b) Bereitstellen der wärmehärtbaren Zusammensetzung nach einem der Ansprüche 1 bis 6; und
(c) Verbinden der wärmehärtbaren Zusammensetzung und der Schicht aus Fasern, um eine Prepreg-Anordnung zu bilden, und Aussetzen der resultierenden Prepreg-Anordnung erhöhten Temperatur- und Druckbedingungen, die ausreichen, um die Schicht aus Fasern mit der wärmehärtbaren Zusammensetzung zu durchziehen, um ein Prepreg zu bilden.

8. Vorgang zum Herstellen eines Prepregs, dessen Schritte Folgendes umfassen:
(a) Bereitstellen einer Schicht aus Fasern;
(b) Bereitstellen der wärmehärtbaren Zusammensetzung nach einem der Ansprüche 1 bis 6 in flüssiger Form;
(c) Durchlaufen der Schicht aus Fasern durch die flüssige wärmehärtbare Zusammensetzung, um die Schicht aus Fasern mit der wärmehärtbaren Zusammensetzung zu durchziehen; und
(d) Entfernen von überschüssiger wärmehärtbarer Zusammensetzung aus der Prepreg-Anordnung.

9. Vorgang zum Herstellen eines Towpregs, dessen Schritte Folgendes umfassen:
(a) Bereitstellen eines Bündels aus Fasern;
(b) Bereitstellen der wärmehärtbaren Zusammensetzung nach einem der Ansprüche 1 bis 6; und
(c) Verbinden der wärmehärtbaren Zusammensetzung und des Bündels aus Fasern, um eine Towpreg-Anordnung zu bilden, und Aussetzen der resultierenden Towpreg-Anordnung erhöhten Temperatur- und Druckbedingungen, die ausreichen, um das Bündel aus Fasern mit der wärmehärtbaren Zusammensetzung zu durchtränken, um ein Towpreg zu bilden.

10. Vorgang zum Herstellen eines Towpregs, dessen Schritte Folgendes umfassen:
(a) Bereitstellen eines Bündels aus Fasern;
(b) Bereitstellen der wärmehärtbaren Zusammensetzung nach einem der Ansprüche 1 bis 6 in flüssiger Form;
(c) Durchlaufen des Bündels aus Fasern durch die flüssige wärmehärtbare Zusammensetzung, um das Bündel aus Fasern mit der wärmehärtbaren Zusammensetzung zu durchtränken; und
(d) Entfernen von überschüssiger wärmehärtbarer Zusammensetzung aus der Towpreg-Anordnung, dadurch Bilden eines Towpregs.

11. Klebstoffzusammensetzung, umfassend die wärmehärtbare Zusammensetzung nach einem der Ansprüche 1 bis 6.

12. Klebstoffzusammensetzung nach Anspruch 11, ferner umfassend einen Haftvermittler, ein Flammschutzmittel, einen Füllstoff, einen thermoplastischen Zusatzstoff, einen Reaktiv- oder Unreaktivverdünner und/oder ein thixotropes Materials.

13. Gehärtetes Reaktionsprodukt der Klebstoffzusammensetzung nach Anspruch 11 oder 12.

## Revendications

1. Composition thermodurcissable comprenant :
(a) un composant benzoxazine comportant un ou plusieurs 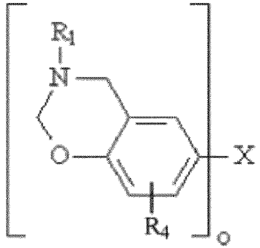 où O est 1 à 4, X est choisi dans le groupe consistant en une liaison directe (lorsque O vaut 2), un alkyle (lorsque O vaut 1), un alkylène (lorsque O vaut 2 à 4), un carbonyle (lorsque O vaut 2), un thiol (lorsque O vaut 1), un thioéther (lorsque O vaut 2), un sulfoxyde (lorsque O vaut 2) et un sulfone (lorsque O vaut 2), R₁ est choisi dans le groupe consistant en l'hydrogène, un alkyle et un aryle, et R₄ est choisi parmi l'hydrogène, un halogène, un alkyle et un alcényle ou 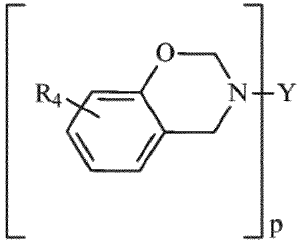 où p est égal à 2, Y est choisi dans le groupe consistant en un biphényle (lorsque p vaut 2), un diphénylméthane (lorsque p vaut 2), un diphénylisopropane (lorsque p vaut 2), un sulfure de diphényle (lorsque p vaut 2), un diphénylsulfoxyde (lorsque p vaut 2), un diphénylsulfone (lorsque p vaut 2), et une diphénylcétone (lorsque p vaut 2), et R₄ est choisi dans le groupe consistant en l'hydrogène, un halogène, un alkyle et un alcényle ; et
(b) des particules de caoutchouc à noyau et enveloppe ayant sur un diamètre moyen inférieur à 500 nm et dont le noyau est constitué d'une matière polymère ayant des propriétés élastomères ou caoutchouteuses, ledit noyau étant entouré par une enveloppe constituée d'une matière polymère non élastomère.

2. Composition thermodurcissable selon la revendication 1, dans laquelle les particules de caoutchouc à noyau et enveloppe ont un noyau constitué essentiellement d'un mélange polybutadiène/styrène.

3. Composition thermodurcissable selon la revendication 1 ou la revendication 2, dans laquelle les particules de caoutchouc à noyau et enveloppe ont un diamètre moyen allant de 25 à 100 nm.

4. Composition thermodurcissable selon l'une quelconque des revendications 1 à 3, dans laquelle la benzoxazine comprend 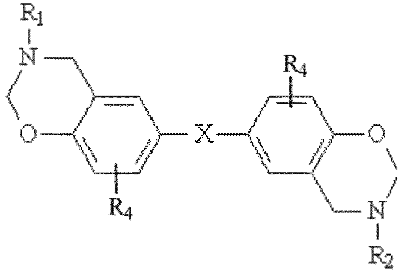 dans laquelle X est choisi dans le groupe consistant en une liaison directe, CH₂, C(CH₃)₂, C=O, S, S=O et O=S=O, et R₁, R₂, et R₄ sont identiques ou différents et sont choisis dans le groupe consistant en l'hydrogène, un alkyle, un alcényle et un aryle.

5. Composition thermodurcissable selon l'une des revendications 1 à 4, dans la benzoxazine comprend un ou plusieurs

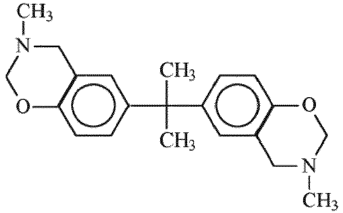

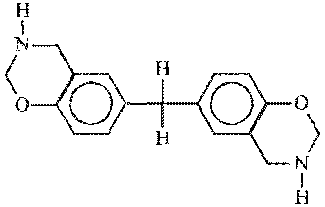

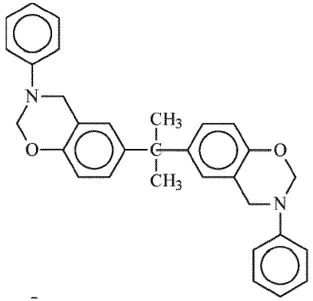

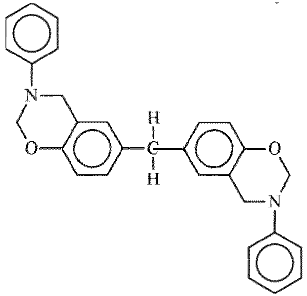

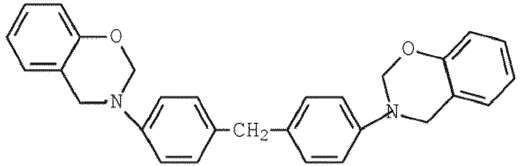

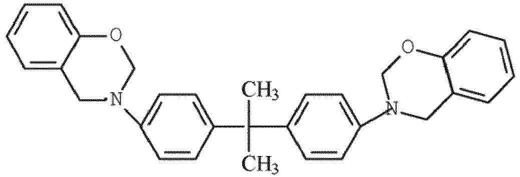

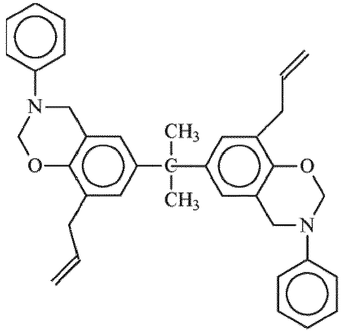

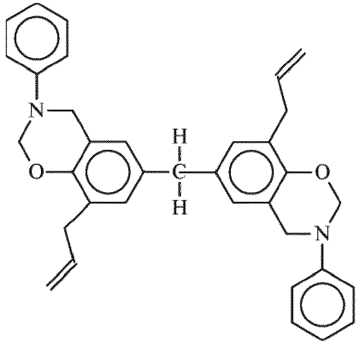

6. Composition thermodurcissable selon l'une quelconque des revendications 1 à 5, comprenant en outre un composant de charge minéral, dans laquelle le composant de charge minéral comprend une nanoparticule de silice.

7. Procédé de production d'un pré-imprégné, qui comprend les étapes consistant à :
(a) produire une couche de fibres ;
(b) produire la composition thermodurcissable selon l'une quelconque des revendications 1 à 6 ; et
(c) lier la composition thermodurcissable et la couche de fibres pour former un ensemble pré-imprégné, et exposer l'ensemble pré-imprégné résultant à des conditions de température et de pression élevées suffisantes pour imprégner la couche de fibres avec la composition thermodurcissable afin de former un pré-imprégné.

8. Procédé de production d'un pré-imprégné, qui comprend les étapes consistant à :
(a) produire une couche de fibres ;
(b) produire la composition thermodurcissable selon l'une quelconque des revendications 1 à 6 sous forme liquide ;
(c) faire passer la couche de fibres à travers la composition thermodurcissable liquide pour imprégner la couche de fibres avec la composition thermodurcissable ; et
(d) élimination la composition thermodurcissable en excès de l'ensemble pré-imprégné.

9. Procédé de production d'étoupe pré-imprégnée, qui comprend les étapes consistant à :
(a) produire un paquet de fibres ;
(b) produire la composition thermodurcissable selon l'une des revendications 1 à 6 ; et
(c) lier la composition thermodurcissable et le paquet de fibres pour former un ensemble pré-imprégné, et exposer l'ensemble pré-imprégné résultante à des conditions température et de pression suffisamment élevées pour imprégner le paquet de fibres avec la composition thermodurcissable afin de former une étoupe pré-imprégnée.

10. Procédé de production d'une étoupe pré-imprégnée, qui comprend les étapes consistant à :
(a) produire un paquet de fibres ;
(b) produire la composition thermodurcissable selon l'une des revendications 1 à 6 sous forme liquide ;
(c) faire passer le paquet de fibres à travers la composition thermodurcissable liquide pour imprégner le paquet de fibres avec la composition thermodurcissable ; et
(d) éliminer la composition thermodurcissable en excès de l'ensemble pré-imprégné afin de former une étoupe pré-imprégnée.

11. Composition adhésive comprenant la composition thermodurcissable selon l'une quelconque des revendications 1 à 6.

12. Composition adhésive selon la revendication 11, comprenant en outre un ou plusieurs d'un promoteur d'adhérence, un ignifuge, une charge, un additif thermoplastique, un diluant réactif ou non réactif, et un thixotrope.

13. Produit de réaction durci de la composition adhésive selon la revendication 11 ou la revendication 12.
